# EUROPÄISCHE PATENTSCHRIFT

(11) **EP 3 557 161 B1**
(45) Veröffentlichungstag und Bekanntmachung des Hinweises auf die Patenterteilung: **30.09.2020**
(21) Anmeldenummer: 19152356.2
(22) Anmeldetag: 17.01.2019
(51) Int. Cl.: F25B 25/02, F25B 9/00, F25B 17/08

(54) **HYBRID-WÄRMEPUMPE UND DEREN VERWENDUNG**
HYBRID HEAT PUMP AND ITS USE
POMPE À CHALEUR HYBRIDE ET SON UTILISATION

(30) Priorität: 20.04.2018 DE 102018109577
(43) Veröffentlichungstag der Anmeldung: 23.10.2019
(73) Patentinhaber: Karlsruher Institut für Technologie, 76131 Karlsruhe (DE)
(72) Erfinder: SCHMIDT, Ferdinand, 76135 Karlsruhe (DE); DESAI, Aditya, 76137 Karlsruhe (DE)
(74) Vertreter: Fitzner, Uwe

(56) Entgegenhaltungen:
- DE-A1-102014 113 450
- DE-U1-202013 008 465
- JP-A- 2009 121 725
- US-A1- 2007 019 708

## Beschreibung

Die vorliegende Erfindung betrifft eine Hybrid-Wärmepumpe und deren Verwendung.

Hybride Wärmepumpen oder Kälte-Maschinenzyklen, bei denen die Abwärme eines Kompressors zum Antrieb eines Sorptionsprozesses genutzt werden, sind bekannt. Ein Beispiel ist die DE 4440589 A1. Die thermodynamischen Zusammenhänge des transkritischen CO2-Zyklus sind z.B. bei DM Robinson und EA Groll "Efficiencies of transcritical CO2 cycles with and without an expansion turbine", Int. Journal of Refrigeration 21 (1998), 577 - 589, dargestellt.

Die Kopplung eines transkritischen CO2-Kompressionszyklus und eines Adsorptionszyklus ist ferner aus A. Gibelhaus et al. "Effiziente Kältebereitstellung durch Kopplung von Adsorptions- und CO2-Kompressionskälteanlage", DKV-Tagung Kassel, 16. - 18.11.2016, bekannt. In diesem Beitrag erfolgt die Kopplung derart, dass keine Pufferung der Im Adsorptions-Zyklus benötigten und frei werdenden Wärmen auftritt. Das Adsorptionssystem weist nur einen Adsorber auf, woraus sich bestimmte Nachteile für die Effizienz des gekoppelten Systems ergeben.

Ferner ist eine andere Art der Kopplung eines CO2-Kompressionszyklus mit einem Adsorptionszyklus von P. Cyklis "Two stage ecological hybrid sorption-compression refrigeration cycle", Int. Journal of Refrigeration, 48, (2014), 121 - 131, bekannt. Dabei kommt kein transkritischer CO2-Zyklus zum Einsatz, sondern es handelt sich um einen zweistufigen Kälteprozess mit CO2-Zyklus als Niedertemperaturstufe und dem Absorptionszyklus als Hochtemperaturstufe. Die Kondensationswärme des CO2-Zyklus wird auf den Verdampfer des Adsorptionszyklus übertragen.

Ein ähnliches System ist aus der DE 19 841 548 C2 bekannt. Zum Antrieb eines solchen Zyklus muss sowohl Strom oder mechanische Energie als auch Wärme zugeführt werden.

Eine weitere Art der Kopplung zwischen Kompressions- und Adsorptionszyklen liegt in der direkten Verbindung der Arbeitsmittelkreisläufe. Die Arbeitsläufe sind u.a. aus A. Askalany et al. "Hybrid adsorption cooling systems - An overview", Renewable and Sustainable Energy Reviews 16 (2012), 5787 - 5801, bekannt. Ein systematischer Überblick verschiedener Kopplungsarten und Zyklen und der bisher gefundenen Erkenntnisse zur Auswahl der geeignetsten hybriden Zyklen wird hierin gegeben. Ein weiterer Überblick ist aus F. Kojok et al., "Hybrid cooling systems", A review and optimal selection scheme", Renewable and Sustainable Energy Reviews, 65 (2016) 57 - 80, bekannt.

Einen Überblick über den technischen Entwicklungsstand der Kompressionswärmepumpen mit einem transkritischen CO2-Zyklus für die Warmwasseraufbereitung ist aus Zhang et al. "Review on CO2 heat pump water heater for residential use in Japan" Renewable and Sustainable Energy Reviews 50 (2015) 1383 - 1391, bekannt.

Schließlich ist der Einsatz einer Adsorptions-Wärmepumpe mit Schichtspeicher aus der WO 2006/034561 bekannt. Aus dieser Anmeldung ist jedoch die Verwendung eines CO2-Zyklus nicht bekannt.

DE 10 2014 113450 A1 offenbart eine adsorptive Wärmetransformationsanordnung mit mindestens zwei Adsorptionskreisläufen und einem Schichtspeicher, wobei beide Kreisläufe mit dem Schichtspeicher gekoppelt sind.

Aufgabe der Erfindung ist es demgemäß, ein System, enthaltend einen transkritisch arbeitenden CO₂ -Wärmepumpenkreislauf sowie ein Adsorptions-Wärmepumpenkreislauf zur Verfügung zu stellen, der sowohl Antriebswärme aus dem CO₂-Kreislauf, als auch Niedertemperaturwärme bezieht und bereits in einer Ausführung mit nur einem Adsorber gegenüber dem Stand der Technik eine höhere Effizienz aufweist. Ferner soll erreicht werden, dass ein Wärmespeicher in das System integrierbar ist, mit dem eine Warmwasseraufbereitungstemperatur entsprechend den Anforderungen bezüglich des Legionellenschutzes möglich ist. Ferner soll eine verbesserte Hybrid-Wärmepumpe geschaffen werden, die sowohl im Strombetrieb als auch im Brennerbetrieb einen Adsorptions-Zyklus nutzt.

Gegenstand der Erfindung ist demgemäß eine Hybrid-Wärmepumpe mit wenigstens einem CO₂-Kompressionskreislauf und mit wenigstens einem

Adsorptions-Kreislauf gemäß Anspruch 1 und ein Verfahren zum Betrieb einer Hybrid-Wärmepumpe gemäß Anspruch 6.

Die Aufgabe der Erfindung wird dadurch gelöst, dass beide Kreisläufe mit wenigstens einem Schichtspeicher gekoppelt sind.

Das erfindungsgemäße System enthält einen transkritisch arbeitenden CO₂-Kreislauf aus wenigstens einem Kompressor, wenigstens einem Gaskühler, wenigstens einer Drossel, wenigstens einem Verdampfer. Für solche Wärmepumpen- oder Kältemaschinen-Systeme wird ein Adsorptionskreislauf auch als Hilfskreislauf eingesetzt, um die Austrittstemperatur des Arbeitsmittels aus dem Gaskühler abzusenken und dadurch die Effizienz des Kompressions-Zyklus zu erhöhen. Die für den Adsorptionszyklus benötigten Komponenten sind wenigstens ein Adsorptionsmodul mit wenigstens einem Adsorber und wenigstens einem Verdampfer/Kondensator mit zugehörigen Pumpen sowie wenigstens ein Schichtspeicher mit den Be- und Entladeeinrichtungen, Mehrwegeselektionsventile und das zugehörige Rohrleitungssystem. Die Nutzwärmesenke wird über ein Mehrwegeselektionsventil und eine Pumpe mit Fluid- aus einer wählbaren Höhe des Speichers beschickt, das nach Wärmeabgabe an die Senke über eine Schichtladevorrichtung wieder in den Speicher zurückströmt.

Schichtspeicher i.S.d. Erfindung weisen mehrere, vorzugsweise drei übereinander angeordnete Schichten auf. Vorzugsweise weisen die Vorrichtungen eine untere, eine mittlere und eine obere Schicht auf. Innerhalb der einzelnen Schichten können zusätzliche Stufungen vorhanden sein (z.B. eine unterste oder oberste Schicht).

Erfindungsgemäß wird der Kompressionskreis (in den Betriebsmodi des Systems, in denen er aktiv ist) vorzugsweise kontinuierlich betrieben.

Die wichtigsten Betriebsmodi des Systems sind:
1. Kompressionsbetrieb mit Adsorption als Hilfszyklus (=Hybridbetrieb).
2. Speicherentladung mit Adsorptionszyklus (Kompressor aus, Brenner aus).
3. Brennerbetrieb (Brenner treibt Adsorptionszyklus an, Kompressor aus).
4. Booster-Betrieb: Kompressor und Brenner an für Spitzenlastdeckung, Adsorptionszyklus ist aktiv.

Diese 4 Betriebsmodi können grundsätzlich sowohl im Wärmepumpenbetrieb als auch im Kältemaschinenbetrieb vorkommen.

Eine typische Abfolge der Betriebsmodi ist 1 - 2 - 3 - 1:
Wenn ein System für Strom ein hohes Preis- oder Knappheitssignal bekommt, erfolgt zunächst Speicherentladung, bei Unterschreiten einer bestimmten Wärmemenge im Speicher erfolgt Umschalten auf Brennerbetrieb und wenn Strom wieder günstig verfügbar zurück auf Kompressionsbetrieb.

In der Regelungslogik sind die Betriebsmodi die oberste Kategorie, unterhalb davon kann jeder Betriebsmodus unterschiedliche Betriebszustände haben bzgl. Temperaturverteilung im Speicher, Leistungsanforderung etc. Für jeden Betriebszustand wird ein Satz von Betriebs- und Regelungsparametern (Sollwerte) im System hinterlegt, z. B. zu Massenströmen der Fluidkreise, Kompressor-Druckniveau, Umschaltkriterium für Adsorptionszyklus.

Der Schichtspeicher weist erfindungsgemäß Be- und Entladeeinrichtungen in diskreten Höhen auf. Der Adsorptionskreislauf wird periodisch betrieben mit abwechselnden Adsorptions- und Desorptionshalbzyklen. Im kältesten (unteren) Bereich wird der Schichtspeicher nur im Adsorptionshalbzyklus im Verdampferkreis durchströmt. Für den Adsorptionskreis wird dem Schichtspeicher im Adsorptionshalbzyklus schrittweise kälteres Fluid entnommen. Der Adsorber wird so schrittweise abgekühlt und das erwärmte Fluid wird jeweils oberhalb der Entnahmestelle in den Speicher zurückgeleitet. Dem untersten Speicherbereich wird jedoch keine Adsorptionswärme zugeführt, damit der Verdampfer diesen Bereich auf eine möglichst niedrige Temperatur kühlen kann und der Gaskühler des Kompressionskreislaufs eine möglichst niedrige Austrittstemperatur erreicht. Der Adsorptionszyklus endet daher bei Fluidentnahme zum Adsorber aus einer zweituntersten Ebene im Schichtspeicher, sobald ein definiertes Umschaltkriterium wie eine minimale Temperaturspreizung im Adsorberkreis erreicht ist. Dann erfolgt die Desorption durch schrittweises Aufheizen des Adsorbers durch Fluidentnahme aus zunehmender Höhe im Schichtspeicher, wobei die Kondensationswärme über den Kondensatorkreis dem mittleren Bereich des Schichtspeichers und von dort aus der Nutzwärmesenke zugeführt wird.

Über den ganzen Ad- und Desorptionszyklus betrachtet bewirkt dieser, dass dem obersten Speicherbereich Wärme entzogen wird und auch dem untersten Speicherbereich Wärme entzogen wird. Bei hinreichend großer Dimensionierung des Speichers bleibt die Temperatur des Kältemittels CO₂ im Austritt des Gaskühlers über die Zeit des Adsorptions-Zyklus nahezu konstant. Dies bewirkt einen Effizienzvorteil gegenüber dem Stand der Technik. Eine weitere Effizienzerhöhung wird durch die im Adsorberkreislauf zwischen Ad- und Desorption realisierte Wärmerückgewinnung erreicht.

In einer Variante der Erfindung können mit der vorhandenen Hydraulik auch andere Adsorptlons-Zyklen realisiert werden, insbesondere Zyklen mit Verzweigung. Und/oder mit näherungsweise isothermen Ad- und Desorptionsschritten mit variabler Verdampfer- und Kondensatortemperatur. Je nach Betriebsbedingungen des Kompressions-Zyklus und Ladezustand des Schichtspeichers können unterschiedliche Adsorptions-Zyklen vorteilhaft sein. Angestrebt wird im stationären Betrieb eine näherungsweise lineare Schichtung des Speichers (d.h. ein linearer Temperaturverlauf über die Speicherhöhe), da dadurch eine gute Auskühlung des Kältemittelrücklaufs aus dem Gaskühler erreicht wird.

Für eine Wärmepumpe, die auch Trinkwasser bereitstellt, kann an den Schichtwärmespeicher zusätzlich eine Trinkwasserstation nach dem Stand der Technik angebunden werden, die analog zur Wärmesenke mittels eines Mehrwegeventils aus mindestens zwei verschiedenen Höhen im Speicher Fluid entnehmen kann. Dadurch kann auch eine Legionellen-Schutzschaltung erreicht werden.

In einer Variante der Erfindung ist zusätzlich zum Gaskühler des CO₂ -Kompressionskreislaufes eine weitere Wärmequelle, die Antriebswärme für den Adsorptions-Zyklus zur Verfügung stellen kann und dann mittels der Pumpe den oberen Bereich der Schichtspeicher erwärmt, vorgesehen. Wenn es sich bei der Wärmequelle um einen Brenner handelt oder eine ähnliche Quelle, die einen Abgasstrom erzeugt, kann es sinnvoll sein, zur Abkühlung dieses Abgasstroms einen zusätzlichen Wärmeübertrager hinter der Wärmesenke anzuordnen.

Mittels der Zusatzwärmequelle kann der Adsorptions-Zyklus unabhängig vom Kompresslons-Zyklus betrieben werden. D.h. im Gegensatz zu Hybrid-Wärmepumpen nach dem Stand der Technik, bei denen eine Kompressions-Wärmepumpe und ein Brennwertkessel im System integriert werden, kann das erfindungsgemäße System auch als vollständig thermisch angetriebene Wärmepumpe betrieben werden. Als Niedertemperaturquelle für den Adsorptions-Zyklus gilt in diesem Fall die zusätzliche Wärmequelle, die mittels eines Dreiwegeventils während der Adsorptionsphase in den Verdampferkreislauf geschaltet wird. Die Wärmequelle kann konstruktiv mit der Wärmequelle des Kompressions-Zyklus eine Einheit bilden, oder sie kann eine zweite, unabhängige Wärmequelle sein. Wenn das Arbeitsmittel im Adsorptions-Zyklus Wasser ist, wird die Wärmequelle bevorzugt so ausgelegt, dass sie während der vorgesehenen Nutzungszeit eine Quelltemperatur von > 0°C aufweist. Im Brennerbetrieb kann es vorteilhaft sein, den Adsorptionszyklus bis zur untersten Ebene des Speichers auszufahren, da der Verdampfer mit der externen Quelle und nicht mit Wärme aus dem unteren Speicherbereich beheizt wird.

Derartige Hybrid-Wärmepumpen sind gut geeignet, Strom aus fluktuierenden erneuerbaren Quellen zu benutzen und bei Nichtverfügbarkeit solchen Stroms die alternative Wärmequelle zu nutzen. Dies kann z.B. ein Gasbrenner sein. Im Brennerbetrieb weist die Wärmepumpe den Effizienzvorteil auf. Im Kompressionsbetrieb weist sie eine annähernd gleiche Effizienz wie subkritisch arbeitende Kompressionswärmepumpen mit anderen Kältemitteln auf. Dabei kann mit sehr geringem konstruktivem Aufwand eine zweite Wärmequelle eingebunden werden, die ein anderes Temperaturniveau als die Hauptquelle aufweisen kann. Zudem kann der Schichtwärmespeicher sehr gut als Pufferspeicher genutzt werden. Mittels des Gaskühler-Wärmeüberträgers ist es möglich, einen Großteil des Speichers auf nahezu auf 100°C aufzuladen. Auch bei linearer Schichtung am Ende einer Phase mit Kompressionsbetrieb kann der Adsorptionszyklus noch weiterlaufen und sich eine Speicherentladephase anschließen, bevor der Brennerbetrieb einsetzt. Auch bei der Entladung des Speichers kann dann noch der Adsorptionszyklus betrieben und Umweltwärme genutzt werden. Der Speicher erreicht mithin eine höhere Energiedichte als ein vergleichbarer Wasserspeicher in einem Wärmepumpensystem mit einem anderen Kältemittel. Wärmepumpen mit klassischen Kältemittel, die subkritisch arbeiten, könnten nur eine maximale Speichertemperatur von etwa 50 - 75°C erreichen.

Die Nutzung eines Schichtwärmespeichers zur zeitlichen Pufferung von Wärme im Adsorptions-Zyklus ermöglicht es, den Adsorptions-Zyklus optimal angepasst an die vom CO₂-Zyklus bereitgestellte Wärme zu betreiben, insbesondere die Temperaturspreizung auf der Antriebsebene des Adsorptions-Zyklus gegenüber dem Stand der Technik deutlich zu steigern. Vor allem kann somit dem Adsorptions-Zyklus mehr Antriebswärme zugeführt werden, als dies bisher nach dem Stand der Technik möglich war. Da der Coefficient of Performance (COP) des Adsorptions-Zyklus aufgrund der über den Schichtwärmespeicher erreichten Wärmerückgewinnung mindestens so hoch ist wie nach dem bisher in Verbindung mit transkritischem CO₂-Zyklen eingesetzten Adsorptionsverfahren, kann mehr Niedertemperaturwärme am Verdampfer des Adsorptions-Zyklus aufgenommen werden, als bisher bekannt. Somit kann dem Arbeitsmittel CO₂ -im Kompressions-Kreislauf mehr Wärme entzogen werden, und dieses im Gaskühler weiter abgekühlt werden. Aufgrund der Charakteristik des transkritischen CO₂-Zyklus steigt demzufolge die Leistungszahl dieses Zyklus und damit die Effizienz des Gesamtsystems zur Bereitstellung von Nutzwärme oder -kälte.

Um das System für die Warmwasseraufbereitung nutzen zu können, bedarf es nur einer höhenvariablen Fluidentnahme aus dem Speicher für den Betrieb einer Trinkwasserstation im Gegenstromverfahren. Hierfür können beispielsweise Plattenwärmetauscher, Strömungssensoren usw. benutzt werden. Bei diesem Verfahren kann der unterste Speicherbereich kälter sein, als der Rücklauf des Fluids aus der Trinkwasserstation in den Speicher. Um die Schichtung im unteren Speicherbereich nicht zu stören, wird eine vermischungsarme Einschichtung eines Fluidrücklaufs in den unteren Speicherbereich durchgeführt.

In einer weiteren Variante der Erfindung kann die zusätzliche Antriebsquelle (z.B. ein Gas- oder Ölbrenner, Biomasse-Brenner, Elektro-Heizstation oder Solarkollektor) an den Speicher angekoppelt werden. Diese Ankopplung findet entsprechend dem Stand der Technik statt. Ebenso ist eine Ankopplung an den Adsorber möglich. Dies führt dazu, dass das System mit geringem Aufwand als hoch effiziente Adsorptions-Wärmepumpe (ohne Betrieb des Kompressions-Zyklus oder auch bei gleichzeitigem Betrieb des Kompressions-Zyklus in Spitzenlastbereichen) benutzt werden kann. Für den Betrieb als reine Adsorptions-Wärmepumpe (ohne Betrieb des Kompressors) muss eine Umweltwärmequelle technisch direkt an den Verdampfer des Adsorptions-Systems angekoppelt werden, da im Hybridbetrieb nur der untere Speicherbereich als Wärmequelle für den Verdampfer dient. Sofern eine Umweltquelle des Kompressions-Zyklus hierfür geeignet ist, kann hierfür entweder ein separater Wärmeträgerkreislauf zwischen dem Wärmequellenkreislauf und dem Verdampfer des Adsorptions-Teilsystems verwendet werden oder dieser Wärmeübertrager kann in dem Verdampfer des Kompressions-Teils mit integriert werden.

Durch die Kopplung des CO₂ - Kompressions-Zyklus an einen angepassten, gepufferten Adsorptions-Zyklus werden die mittleren Betriebsbedingungen für den CO₂ --Zyklus verbessert und die Gesamteffizienz gesteigert, insbesondere gegenüber dem von Gibelhaus et al. (DKV-Tagung 2016) beschriebenen System. Die Kopplung der beiden Zyklen erfolgt erfindungsgemäß über einen Wärmespeicher, der zugleich auch der Pufferung von Wärme und der internen Wärmerückgewinnung innerhalb des Adsorptions-Zyklus dient. Ein gekoppelter Betrieb der beiden Zyklen ist dadurch gekennzeichnet, dass durch den Kühler des Kompressions-Zyklus dem Speicher in allen Zonen gleichzeitig Wärme zugeführt wird. Z.B. kann der Gaskühler als sich über die gesamte Höhe des Speichers erstreckende, im Speicher verlaufende Rohrschlange ausgeführt sein. Alternativ kann der untersten Speicherzone Fluid entnommen werden, das dann in einem externen Wärmeüberträger erwärmt und in den obersten Speicherzonen wieder eingeschichtet wird. Weiterhin ist der gekoppelte Betrieb dadurch gekennzeichnet, dass bezüglich des Adsorptions-Zyklus drei Zonen im Speicher auftreten. In der oberen Zone liegt das Temperaturniveau oberhalb der Nutztemperatur (bzw. beim Betrieb des Systems als Kältemaschine oberhalb der Rückkühltemperatur). Der Adsorptionsprozess entzieht in dieser Zone Wärme (als Antriebswärme für die Desorption). In der mittleren Speicherzone liegt das Temperaturniveau z.B. zwischen Vor- und Rücklauftemperatur eines Gebäudeheizsystems (bzw. eines Rückkühlers). Aus dieser Zone wird im Mittel über den Adsorptions-Zyklus nutzbare Wärme abgeführt (bzw. Abwärme an die Umgebung abgegeben). In der unteren Speicherzone liegt die Temperatur unterhalb des Nutzungsniveaus (bzw. der Rückkühlung) und dieser Zone wird im Mittel über den Adsorptions-Prozess Wärme entzogen. Aufgrund der kontinuierlichen Temperaturschichtung des Wärmespeichers ist eine Carnotisierung des Adsorptionsprozesses möglich und infolge der Effizienzsteigerung des Adsorptions-Zyklus wird eine weitergehende Abkühlung des Arbeitsmittels CO2 am Austritt des Gaskühlers erreicht, wodurch die Gesamteffizienz gesteigert wird. Camotisierung bedeutet: Steigerung des Carnot-Gütegrades des Prozesses, d.h. Prozessführung näher am thermodynamischen Optimum (2. Hauptsatz).

Der Adsorber und der Verdampfer/Kondensator werden vorzugsweise hydraulisch mit dem Schichtspeicher verbunden. Vorzugsweise weist der Adsorptionskreislauf folgende Komponenten auf:
- Adsorptionsmodul aufweisend mindestens einen Adsorber mit mindestens einem Adsorbens und mindestens einen weiteren Wärmeübertrager (3) und mindestens ein Arbeitsmittel;
- mindestens einen Schichtwärmespeicher;
- mindestens eine Antriebswärmequelle; und
- mindestens ein Wärmeträgerfluid
dadurch gekennzeichnet, dass
sowohl der Adsorber als auch der Wärmeübertrager eine verschließbare fluidische Verbindung für das Wärmeträgerfluid zum Wärmespeicher aufweisen, wobei das in der Verbindung vorliegende Wärmeträgerfluid eine Zirkulation zwischen Wärmeübertrager und Wärmespeicher aufweist.

Eine Zirkulation ist ein Fluidfluss in eine vorgegebene Richtung, wobei sich aufgrund der Kontinuitätsbedingung (Massenerhaltung des Fluids) eine geschlossene Bahnkurve der Strömung des Fluids durch bestimmte Komponenten der Vorrichtung ergibt Für die erfindungsgemäße Verwendung des Begriffs "Zirkulation" ist es unerheblich, ob die Strömung durch eine Pumpe hervorgerufen wird (erzwungene Konvektion) oder durch temperaturbedingte Dichteunterschiede unter Schwerkrafteinfluss zustande kommt (natürliche Konvektion, Thermosiphon) oder ob Ursache der Zirkulation Temperaturunterschiede sind, die zu einer Zweiphasenströmung führen wie im Wärmerohr (Heatpipe).

Ein Kreislauf wird definiert als eine fluidische Verbindung mit darin vorliegender Zirkulation eines Wärmeträgerfluids.

Mithin liegt in der Kondensationsphase eine Zirkulation des Wärmeträgerfluids zwischen Wärmetauscher, der in dieser Phase ein Kondensator ist, und Wärmespeicher vor; bevorzugt wird diese Zirkulation mittels einer Pumpe erreicht. Alternativ ist auch ein Zweiphasen-Wärmetransport in einem Wärmerohr (Heatpipe) ohne Pumpe möglich.

Die Vorrichtung enthält sowohl im Kondensator- und/oder Verdampferkreislauf als auch im Adsorberkreislauf je eine offene, aber verschließbare Verbindung zwischen Wärmeübertrager und Wärmespeicher. Mit anderen Worten, es muss sowohl eine fluidische Verbindung Adsorber-Speicher als auch Kondensatorkreis-Speicher vorhanden sein. Die beiden Verbindungen müssen gleichzeitig nutzbar sein, ohne dass es zu einer Angleichung der Temperaturniveaus zwischen Adsorber- und Kondensator-/Verdampferkreislauf (z.B. durch Fluidvermischung) kommt.

Eine fluidische Verbindung im Sinne der Erfindung ist ein fluiddichtes Element wie zum Beispiel Rohr, Schlauch, Kanal oder Kombinationen davon und Ähnliches, das von einem Fluid durchströmbar ist und den Transport eines Fluids von einem Ort zu einem anderen, bevorzugt innerhalb der erfindungsgemäßen Vorrichtung ermöglicht. In einer Alternative ist die fluidische Verbindung fluid- und/oder druckdicht.

Eine solche Verbindung kann weitere fluiddichte Elemente aufweisen beziehungsweise enthalten, die von dem Fluid durchströmbar sind wie zum Beispiel Pumpe, Bauteil zur Absperrung oder Regelung des Durchflusses von Fluiden, bevorzugt Ventil, Heizung/Wärmequelle.

Eine Wärmequelle ist im Sinne der Erfindung ein Wärmeübertrager, durch den ein Fluid strömt und dabei eine Enthalpieerhöhung (in Form einer Temperaturerhöhung und/oder eines Phasenwechsels) erfährt.

Im Sinne der Erfindung ist unter Komponente eine Vorrichtung, Bestandteil, Element eines Ganzen, Modul, Einheit, Bauteil, Zubehör, Gerät oder Apparatur zu verstehen, aber auch Mittel oder Fluid.

Modul bedeutet im Sinne der Erfindung ein austauschbares Element innerhalb eines Gesamtsystems einer Vorrichtung oder einer Maschine, das eine geschlossene Funktionseinheit bildet.

Unter einem Adsorptionsmodul wird im Sinne der Erfindung eine das Arbeitsmittel (in mindestens einer Kammer) druck- und/oder vakuumdicht umschließende Einheit verstanden, die mindestens einen Adsorber und mindestens einen als Verdampfer und/oder Kondensator für das Arbeitsmittel fungierenden Wärmeübertrager enthält. Das Arbeitsmittel (Sorptionsmittel) wird zwischen dem mindestens einen Adsorber und mindestens einen Wärmeübertrager periodisch ausgetauscht, allerdings lediglich an deren Außenseite. In den Wärmeübertragern, wie der Adsorber auch einer ist, fließt das Wärmeträgerfluid.

Im Fall von Niederdruck-Arbeitsmitteln wie Wasser oder Methanol wird eine vakuumdichte Hülle eingesetzt.

Im Stand der Technik werden verschiedene Arten von Adsorptionsmodulen beschrieben, die erfindungsgemäß hier eingesetzt werden können, zum Beispiel ein Modultyp, bei dem es nur einen Wärmeübertrager gibt, der sowohl als Verdampfer als auch als Kondensator fungiert, als auch ein Modultyp, bei dem Verdampfer und Kondensator getrennte Wärmeübertrager sind und es zusätzlich Dampfventile und eine Kondensatrückführung gibt.

In einer Ausführung weisen die Vorrichtung Adsorber und Wärmeübertrager eine gemeinsame Vakuumhülle auf. Das Adsorptionsmodul ist abgeschlossen durch eine Vakuum-Hülle.

In einer Alternative weist die Vorrichtung genau einen Adsorber auf.

Eine weitere Ausführung ist eine Vorrichtung, bei der der Wärmeübertrager ein Kondensator- und Verdampfer-Wärmeübertrager ist.

In einer Alternative liegen zwei Wärmeübertrager vor, ein Kondensator-Wärmeübertrager und ein Verdampfer- Wärmeübertrager.

Die Vorrichtung weist zwei räumlich getrennte, fluidische Kreisläufe auf, einen Kreislauf des Arbeitsmittels im Adsorptionsmodul und mindestens einen des Wärmeträgerfluids. Für die Variante mit getrenntem Verdampfer und Kondensator und insbesondere für Methanol oder Ammoniak als Arbeitsmittel ist es vorteilhaft, verschiedene Wärmeträgerfluide im Verdampfer- und im Speicherkreislauf verwenden zu können (z.B. ein Wasser-Glykol-Gemisch im Verdampferkreislauf und reines Wasser im Speicherkreislauf).

Räumlich getrennt, bedeutet dass die Fluide keinen fluiden Kontakt miteinander haben, mithin das Wärmeträgerfluid und Arbeitsmittel sich nicht mischen können aufgrund der getrennten Kreisläufe.

Der Begriff "Kreislauf" wird verwendet, um den Unterschied zu fluidischen Verbindungen zu verdeutlichen, die lediglich einen Hin- und/oder Rücklauf von Fluiden ermöglichen. In einem Kreislauf findet keine Strömungsumkehr über den gesamten Querschnitt der Leitung statt, d.h. die Strömungsrichtung des Fluids wird beibehalten, ggf. unterbrochen, aber nicht umgekehrt. In einer Alternative schließt ein Kreislauf eine Stromumkehr aus.

In einer Alternative weist der Kreislauf des Wärmeträgerfluids mindestens drei, bevorzugt genau vier untergeordnete Kreisläufe auf. Diese untergeordneten Kreisläufe werden als Heizerkreis, Adsorberkreis, beziehungsweise als Verdampfer-/ Kondensatorkreis bezeichnet und gegebenenfalls Wärmesenkenkreislauf. Diese drei beziehungsweise vier Kreisläufe weisen über Bauteile zur Absperrung oder Regelung des Durchflusses von Fluiden mindestens eine fluidische Verbindung untereinander auf. Diese untergeordneten drei beziehungsweise vier Kreisläufe weisen mithin mindestens eine für das Wärmeträgerfluid durchströmbare fluidische Verbindung auf.

In einer Ausführung weist die Vorrichtung mindestens einen Adsorberkreislauf auf, enthaltend eine fluidische Verbindung von Adsorber zu Wärmespeicher mit mindestens einer Pumpe und mindestens einem, bevorzugt zwei Bauteilen zur Absperrung oder Regelung des Durchflusses von Fluiden, bevorzugt Mehrwegeselektlonsventilen.

In einer Alternative ist ein Bauteil zur Absperrung oder Regelung des Durchflusses von Fluiden ein Mehrwegeselektionsventil.

Unter einem Mehrwegeselektlonsventil wird ein x/(x-1) Wegeventil verstanden mit x größer 3, also ein Wegeventil, das mindestens vier Anschlüsse hat und mindestens drei Stellungen, wobei ein Anschluss in jeder Stellung offen ist und von den übrigen Anschlüssen in jeder Stellung nur einer offen ist.

In einer Ausführung weist die Vorrichtung mindestens einen Verdampfer-Kondensatorkreislauf auf, enthaltend das Adsorptionsmodul mit nur einen als Verdampfer und Kondensator fungierenden Wärmeübertrager und eine fluidische Verbindung von Wärmeübertrager zu Wärmespeicher mit mindestens einer Pumpe und mindestens einem, bevorzugt mindestens zwei Bauteilen zur Absperrung oder Regelung des Durchflusses von Fluiden, bevorzugt Mehrwegeselektionsventilen, wobei im Verdampfer-/Kondensatorkreislauf weiterhin eine über ein Ventilbauteil herstellbare fluidische Verbindung zu einer Niedertemperatur-Wärmequelle besteht, die für die Verdampfungsphase in diesen Fluidkreislauf geschaltet werden kann.

In einer Ausführung enthält die Vorrichtung ein Adsorptionsmodul mit zwei getrennten Wärmeübertragern als Verdampfer und Kondensator, der Verdampferkreislauf weist mindestens eine Pumpe und eine fluidische Verbindung zu einer Niedertemperatur-Wärmequelle auf und ist zusätzlich Wärme aus dem Wärmespeicher über eine öffenbare fluidische Verbindung oder über einen Wärmeübertrager in den Verdampferkreis einkoppelbar, und weiterhin besteht eine fluidische Verbindung zwischen dem Kondensatorkreislauf und dem Wärmespeicher, mittels derer Kondensationswärme in den Wärmespeicher eingebracht werden kann.

In einer Alternative wird das Adsorbens ausgewählt aus der Gruppe enthaltend oder bestehend aus mikroporösen Adsorbentien, d.h. mit Porenweite <2 nm, bevorzugt aus der Gruppe der Zeolithe, Aluminophosphate (AlPOs), Silico-Aluminophosphate (SAPOs), Silikagele, Aktivkohlen oder der metallorganischen Gerüstmaterialien (MOFs) oder dass das Adsorbens eine Mischung dieser Materialien enthält; weiterhin ist das Arbeitsmittel ausgewählt aus der Gruppe enthaltend oder bestehend aus Wasser, Ammoniak, Methanol, Ethanol.

In einer Ausführung weist die Vorrichtung mindestens einen Heizerkreislauf auf, enthaltend eine fluidische Verbindung von Antriebswärmequelle zu Wärmespeicher mit mindestens einer Pumpe und/oder mindestens einem Bauteil zur Absperrung oder Regelung des Durchflusses von Fluiden, bevorzugt Mehrwegeselektionsventil.

In einer Ausführung weist die Vorrichtung mindestens einen Wärmesenkenkreislauf auf, enthaltend eine fluidische Verbindung von Mitteltemperatur-Wärmesenke zu Wärmespeicher mit mindestens einer Pumpe und/oder mindestens einem Bauteil zur Absperrung oder Regelung des Durchflusses von Fluiden, bevorzugt Mehrwegeselektionsventil.

Die einzelnen mindestens drei oder vier untergeordneten Kreisläufe: Helzerkreis (mit Pumpe 15), Adsorberkreis (mit Pumpe 16), Verdampfer-/Kondensatorkreis (mit Pumpe 17) und Senkenkreis (mit Pumpe 18) sind unabhängig voneinander betreibbar.

In einer weiteren Ausführung weist der Schichtwärmespeicher mindestens 3 Schichten des Wärmeträgerfluids mit unterschiedlichen Temperaturen auf. Dieser weist in einer Alternative mindestens eine Schichtbeladelanze und/oder mindestens eine Entladevorrichtung in diskreten Höhen des Wärmespeichers auf.

Der Schichtwärmespeicher weist in einer Alternative mindestens eine Entladevorrichtung mit höhenvariabler Entnahme und/oder eine Schichtbeladelanze auf.

In einer Alternative weist der Schichtwärmespeicher mindestens eine Entladevorrichtung mit mindestens 4, bevorzugt mindestens 6 diskreten Entnahmepositionen (-höhen) auf, die eine fluidische Verbindung zu mindestens zwei der Kreisläufe aufweist.

In einer weiteren Alternative hat der Schichtspeicher mindestens 5, 6, 7, 8, 9, 10, 11, 12, 13, 14, 15 oder mehr Entnahmehöhen, also Wärmeträgerfluid-Schichten.

im Sinne der Erfindung bedeutet diskrete Höhe einen Temperaturunterschied zwischen zwei benachbarten Schichten von 2-20 Kelvin, bevorzugt 3-15 Kelvin, besonders bevorzugt 4-12 Kelvin. Z.B. bedeuten 6 Entladehöhen bei einer Temperaturspreizung über die Speicherhöhe von 60 K einen Abstand benachbarter Entnahmehöhen von 12 K.

Ein erfindungsgemäß einzusetzender Schichtspeicher wird zum Beispiel in der DE 102014113450 A1 beschrieben. Allgemein erfolgt die Einschichtung in den Wärmespeicher bspw. durch Schichtladelanzen mit vielen Öffnungen, die innerhalb des Wärmespeichers vertikal angeordnet sind. Aufgrund der auftretenden Dichte- und Druckunterschiede des Fluides unterschiedlicher Temperatur schichtet sich das Fluid, wenn es aus den Öffnungen tritt, nahezu selbst ein. Jedoch tritt bei hohen Strömungsgeschwindigkeiten eine Vermischung der benachbarten Schichten vermehrt auf, wodurch eher ein kontinuierlicher Temperaturübergang als eine Schicht erzeugt wird. In einer bevorzugten Weiterbildung der Erfindung kann der Wärmespeicher ein thermisch geschichteter Wärmespeicher sein, der einen oder mehrere Speicherbehälter für ein Wärmeträgerfluid aufweist, in dem die Vielzahl von Be- und Entladeeinrichtungen zur gleichzeitigen Einschichtung und/oder Entnahme eines Wärmeträgerfluids angeordnet sein können. Es können mit den Be- und Entladeeinrichtungen, wie schon beschrieben, zwei oder mehr Wärmeträgerfluidströme verschiedener Temperatur gleichzeitig in verschiedene Schichten eingespeichert oder entnommen werden. Bevorzugt können die einzelnen Be- und Entladeeinrichtungen des Wärmespeichers jeweils horizontal im Wärmespeicher liegen und dabei so übereinander angeordnet und ausgebildet sein, dass eine Richardsonzahl Ri der Fluideinströmung (mit dem Abstand benachbarter Entladeeinrichtungen in der Höhe als charakteristischer Länge) in einem Bereich von 100 bis 3000 erreicht werden kann. Die Be- und Entladeeinrichtungen sind in einer Alternative aus einem Rohr aufgebaut. Das Rohr kann aus Metall oder aus Kunststoff gefertigt sein, je nach Anwendungsbedarf. Das Rohr hat Öffnungen und ist umgeben von einem offenporösen (z.B. schwammartigen) Material. Die Poren haben jeweils eine Austrittsöffnung, deren Fläche zusammengenommen eine Austrittsfläche bildet, durch die das Wärmeträgerfluid entweichen kann. Durch die große Oberfläche und die offenporige Struktur dieser Be- und Entladeeinrichtung wird erreicht, dass auch bei großen Volumenströmen das Wärmeträgerfluid mit sehr geringen Strömungsgeschwindigkeiten in den Speicherbehälter eingebracht wird und somit eine gute Schichtung stattfindet. Insbesondere können Freistrahlen (Jets) vermieden werden, also lokalisierte Strömungen mit hohen Geschwindigkeiten und großen Geschwindigkeitsgradienten, die sonst zu einer großräumigen Vermischung und einer erheblichen Störung der thermischen Schichtung innerhalb des Speicherbehälters führen könnten.

In einer Ausführung ist der Adsorber mit dem Wärmespeicher fluidisch verbunden (bzw. über Ventile mit verschiedenen Höhen im Speicher verbindbar), und zusätzlich ist auch der Kondensator mit dem Wärmespeicher fluidisch verbunden (bzw. über ein unabhängiges Ventilsystem wiederum mit verschiedenen Höhen im Speicher verbindbar). In einer Alternative sind die zwischen Adsorber und Speicher und zwischen Kondensator und Speicher gebildeten Kreisläufe gleichzeitig betreibbar, ohne dass es zu einer nennenswerten Vermischung (und Temperaturangleichung) zwischen beiden Kreisläufen kommt.

Das Adsorptionsmodul besteht in der einfachsten möglichen Ausführung nur aus einem Adsorber und einem Verdampfer/Kondensator in einer gemeinsamen Vakuumhülle. Der Adsorber ist über eine Pumpe, zwei Mehrwege-Selektionsventile und ein Rohrsystem mit dem Wärmespeicher fluidisch verbunden. Je nach Stellung von einem Ventil wird Fluid aus einer bestimmten Höhe im Speicher durch eine Schichtladeeinrichtung entnommen und je nach Stellung von einem Ventil nach dem Durchlaufen des Adsorbers in eine andere Höhe des Speichers wieder eingeschichtet.

Der Verdampfer/Kondensator ist ebenfalls über eine Pumpe und Mehrwege-Selektionsventile mit dem Schichtspeicher fluidisch verbunden. Somit kann auch das dem Verdampfer/Kondensator zugeführte Fluid in variabler Höhe aus dem Speicher entnommen werden und in eine beliebige Höhe wiedereingeschichtet werden. Über ein Dreiwegeventil kann statt des Wärmespeichers eine Niedertemperatur-Wärmequelle in den Verdampferkreis hydraulisch eingebunden werden.

Die Hochtemperatur-Wärmequelle (Antriebswärmequelle) ist ebenfalls fluidisch an den Wärmespeicher angekoppelt: Über ein Mehrwege-Selektionsventil kann die Entnahmehöhe aus dem Speicher gewählt werden, eine Pumpe sorgt für den Volumenstrom durch die Wärmequelle und die Wiedereinschichtung in die höchste Beladezone des Speichers.

Auch die Mitteltemperatur-Wärmesenke ist fluidisch an den Speicher angekoppelt: Hier dient ein Mehrwege-Selektionsventil für die Fluidentnahme aus der gewünschten Höhe im Speicher, eine Pumpe fördert das Fluid durch die Wärmesenke über eine Schichtbeladelanze zurück in den Speicher.

Zur Kombinierbarkeit der oben genannten alternativen Ausführungsvarianten für die Be- und Entladeeinrichtungen im Schichtwärmespeicher kann ausgesagt werden, dass es immer dann, wenn eine höhenvariable Entladevorrichtung im Speicher ein Mehrwegeventil zur Fluidentnahme ersetzt, sinnvoll ist, diese Entladevorrichtung nur für einen Kreislauf zu verwenden. Der Rücklauf des jeweiligen Kreislaufes in den Speicher erfolgt sinnvollerweise entweder über eine separate Schichtbeladelanze oder über ein Mehrwegeselektionsventil (und fest im Speicher installierte Schichtbeladeeinrichtungen), die dann problemlos von mehreren Kreisläufen gemeinsam genutzt werden können.

In einer bevorzugten Verwendung der erfindungsgemäßen Vorrichtung wird Nutzkälte bei verschiedenen Temperaturniveaus bereitgestellt mit einem niedrigeren Temperaturniveau im Verdampfer des Kompressionskreislaufs und einem höheren Temperaturniveau in der Wärmequelle des Adsorptionskreislaufs.

Eine weitere bevorzugte Verwendung findet die erfindungsgemäße Hybridwärmepumpe zur Bereitstellung von Trinkwarmwasser, besonders bevorzugt in Kombination mit der Bereitstellung von Heizwärme.

In einem bevorzugten Verfahren zum Betrieb der erfindungsgemäßen Vorrichtung wird die Temperatur des Verdampfers im Adsorptionskreislauf im Verlauf des Adsorptionshalbzyklus erhöht, indem dem Verdampfer wärmeres Fluid aus dem Schichtwärmespeicher zugeführt wird.

Im Folgenden wird die Erfindung unter Bezugnahme auf die Figuren näher beschrieben:
Figur 1 zeigt ein Ausführungsbeispiel einer Wärmepumpe oder Kältemaschine.
Figur 2 zeigt ein Beispiel einer Konfiguration als Hybrid-Wärmepumpe.

### Bezugszeichenliste:

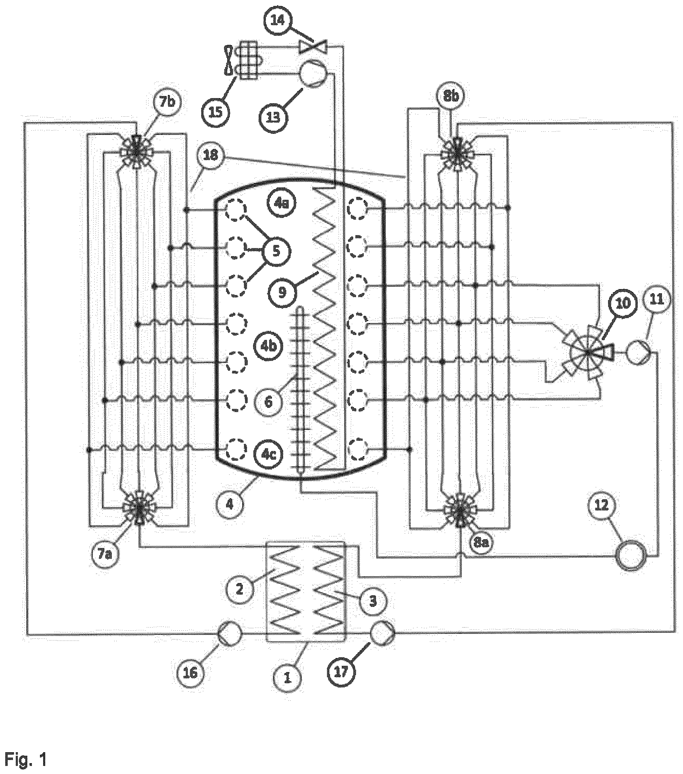

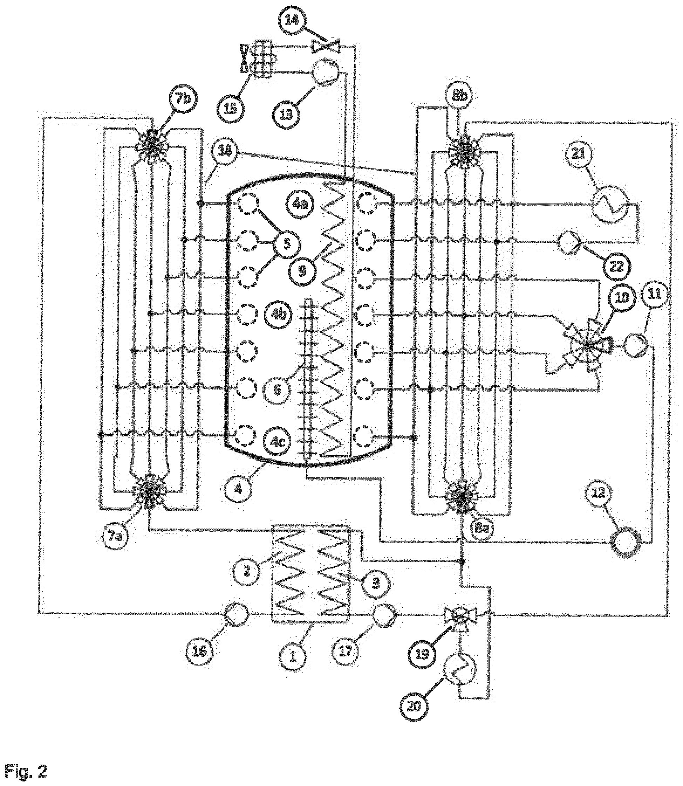

Für Figur 1:
   - 1.: Adsorptionsmodul mit Vakuumhülle und zwei Wärmeübertragern
   - 2.: Adsorber; Adsorptions-Wärmeübertrager
   - 3.: Verdampfer / Kondensator-Wärmeübertrager
   - 4.: Wärmespeicher, bevorzugt Schichtwärmespeicher
   - 5.: Entladeeinrichtungen in diskreten Höhen im Schichtspeicher Schichtwärmespeicher (Schichtspeicher)
   - 6.: Beladelanze zur temperatur- bzw. dichteabhängigen Wiedereinschichtung von Fluid in den Schichtspeicher
   - 7:
   - 7a:: Ventil (Mehrwege-Selektionsventil) zur Fluidentnahme aus dem Schichtspeicher für den Adsorber
   - 7b:: Ventil (Mehrwege-Selektionsventil) zur Auswahl der Beladehöhe der Wiedereinschichtung des Fluids aus dem Adsorberkreis in den Schichtspeicher
   - 8:
   - 8a:: Ventil (Mehrwege-Selektlonsventil) zur Fluidentnahme aus dem Schichtspeicher für den Kondensator (Desorptionsphase) bzw. den Verdampfer (Adsorptionsphase)
   - 8b:: Gaskühler-Wärmeüberträger des CO₂ -Kompressionskreises im Schichtwärmespeicher (Wärmequelle für Speicher und Adsorptionszyklus)
   - 9.: Ventil (Mehrwege-Selektionsventil) zur Entnahme von Fluid aus dem Schichtspeicher für den Heizer
   - 10.: Ventil (Mehrwege-Selektionsventil) zur Entnahme von Fluid aus dem Schichtspeicher für die Mitteltemperatur-Wärmesenke (z.B. Gebäudeheizung)
   - 11.: Pumpe im Kreis der Mitteltemperatur-Wärmesenke, z.B. Gebäudeheizkreis.
   - 12.: Mitteltemperatur-Wärmesenke, z.B. Gebäudeheizkreis (im Wärmepumpenfall) oder Rückkühler (im Kältemaschinenfall).
   - 13: Kompressor in transkritisch betriebenem CO2-Kreis
   - 14: Drossel in transkritisch betriebenem CO2-Kreis
   - 15: Verdampfer in transkritisch betriebenem CO2-Kreis mit Ankopplung an Niedertemperatur-Wärmequelle (z.B. Außenluft)
   - 16: Pumpe im Adsorberkreislauf
   - 17: Pumpe im Verdampfer-/im Kondensator-Kreislauf
   - 18: Leitungssystem zur Verbindung der einzelnen Ausgänge der Mehrwegventile in den einzelnen Schichtlade-/Entladeeinrichtungen im Speicher
Für Figur 2:
   - 1.: Adsorptionsmodul mit Vakuumhülle und zwei Wärmeübertragern
   - 2.: Adsorber; Adsorptions-Wärmeübertrager
   - 3.: Verdampfer / Kondensator-Wärmeübertrager
   - 4.: Wärmespeicher, bevorzugt Schichtwärmespeicher
   - 5.: Entladeeinrichtungen in diskreten Höhen im Schichtspeicher Schichtwärmespeicher (Schichtspeicher)
   - 6.: Beladelanze zur temperatur- bzw. dichteabhängigen Wiedereinschichtung von Fluid in den Schichtspeicher
   - 7:
   - 7a:: Ventil (Mehrwege-Selektionsventil) zur Fluidentnahme aus dem Schichtspeicher für den Adsorber
   - 7b:: Ventil (Mehrwege-Selektionsventil) zur Auswahl der Beladehöhe der Wiedereinschichtung des Fluids aus dem Adsorberkreis in den Schichtspeicher
   - 8:
   - 8a:: Ventil (Mehrwege-Selektionsventil) zur Fluidentnahme aus dem Schichtspeicher für den Kondensator (Desorptionsphase) bzw. den Verdampfer (Adsorptionsphase)
   - 8b:: Ventil (Mehrwege-Selektionsventil) zur Wiedereinschichtung von Fluid aus dem Kondensatorkreis in den Schichtspeicher
   - 9.: Gaskühler-Wärmeüberträger des CO₂-Kompressionskreises im Schichtwärmespeicher (Wärmequelle für Speicher und Adsorptionszyklus)
   - 10.: Ventil (Mehrwege-Selektionsventil) zur Entnahme von Fluid aus dem Schichtspeicher für die Mitteltemperatur-Wärmesenke (z.B. Gebäudeheizung)
   - 11.: Pumpe im Kreis der Mitteltemperatur-Wärmesenke, z.B. Gebäudeheizkreis
   - 12.: Mitteltemperatur-Wärmesenke, z.B. Gebäudeheizkreis (im Wärmepumpenfall) oder Rückkühler (im Kältemaschinenfall)
   - 13.: Kompressor in transkritisch betriebenem CO₂-Kreis
   - 14.: Drossel in transkritisch betriebenem CO₂-Kreis
   - 15.: Verdampfer in transkritisch betriebenem CO₂-Kreis mit Ankopplung an Niedertemperatur-Wärmequelle (z.B. Außenluft)
   - 16.: Pumpe im Adsorberkreis
   - 17.: Pumpe im Verdampfer-/Kondensatorkreis
   - 18.: Leistungssystem zur Verbindung der einzelnen Ausgänge der Mehrwegeventile mit den einzelnen Schichtlade-/Entladeeinrichtungen im Speicher
   - 19.: Dreiwegeventil zur Umschaltung des Verdampfers/Kondensatorkreises zwischen Niedertemperatur-/Wärmequelle und Schichtspeicher
   - 20.: Zusätzliche Niedertemperatur-Wärmequelle des Zyklus für Adsorptionskreis, z.B. Gebäude-Abluft (aus Lüftungsanlage) oder Erdsonde
   - 21.: Zusätzliche Hochtemperatur-Wärmequelle für Adsorptionskreis, z.B. Gasbrenner
   - 22.: Pumpe für zusätzlichen Hochtemperatur-Kreis zur Ladung des oberen Speicherbereiches

Gemäß Figur 1 ist das Adsorbermodul 1 in der einfachsten möglichen Ausführung dargestellt. Es besteht aus einem Adsorber 2 und einem Verdampfer/Kondensator 3 in einer gemeinsamen Vakuumhülle. Das Adsorbens ist in diesem Beispiel SAPO-34, und das Arbeitsmittel Wasser. Der Adsorber 2 ist über eine Pumpe 16, zwei Mehrwege-Selektionsventile 7a, 7b und ein Rohrsystem 18 mit dem Schichtwärmespeicher 4 hydraulisch verbunden. Je nach Stellung von Ventil 7a wird das Fluid aus einer bestimmten Höhe im Speicher durch eine Schichtladeeinrichtung 5 entnommen und je nach Stellung von Ventil 7b nach dem Durchlaufen des Adsorbers in einer anderen Höhe des Speichers wieder eingeschichtet.

Der Verdampfer/Kondensator ist ebenfalls über die Pumpe 17 und Mehrwege-Selektionsventile 8a, 8b mit dem Schichtspeicher 4 hydraulisch verbunden. Somit kann auch das dem Verdampfer/Kondensator 3 zugeführte Fluid in beliebiger Höhe aus dem Speicher entnommen werden und eine beliebige Höhe wieder beschichtet werden. Auch die Mitteltemperatur/Senke 12 ist hydraulisch an den Speicher gekoppelt. Hier dient das Mehrwege-Selektionsventil 10 für die Fluidentnahme aus der gewünschten Höhe im Speicher. Die Pumpe 11 fördert das Fluid durch die Wärmesenke 12 über eine Schichtlanze 6 zurück in den Speicher. Je nach Verschmutzungsgrad des Wassers im Heizsystem kann eine hydraulische Systemtrennung erforderlich sein. In diesem Fall ist die Wärmesenke 12 der Wärmeübertrager, der die Nutzwärme auf das Heizsystem überträgt.

Der Kompressions-Wärmepumpen-Kreislauf ist über den Gaskühler 9 an den Schichtspeicher 4 angekoppelt. In diesem Ausführungsbeispiel erstreckt sich der Gaskühler-Wärmeaustauscher über die gesamte Höhe des Speichers. D.h. im oberen Speicherbereich dient er als Antriebsquelle des Adsorptions-Zyklus. Im mittleren Speicherbereich wird die dem Gaskühler entzogene Wärme (als Nutzwärme) direkt der Wärmesenke 12 zugeführt. Im unteren Speicherbereich dient die Wärme aus dem Gaskühler als Niedertemperatur-Quelle für den Verdampfer 3 des Adsorptions-Zklus. Der Kompressionskreislauf enthält weiterhin die Komponenten Kompressor 13, Verdampfer 15 zur Aufnahme der Umweltwärme und Drossel 14.

Das Wärmepumpen- oder Kältemaschinensystem enthält einen transkritisch arbeitenden CO₂ -Kompressionskreislauf aus Kompressor 13, Gaskühler 9, Drossel 14 und Verdampfer 15. Der Adsorptionskreislauf wird als Hilfskreislauf eingesetzt, um die Austrittstemperatur des Arbeitsmittels aus dem Gaskühler 9 abzusenken und dadurch die Effizienz des Kompressions-Zyklus zu erhöhen. Die für den Adsorptions-Zyklus benötigten Komponenten sind das Adsorptions-Modul 1 mit dem Absorber 2 und dem Verdampfer/Kondensator 3 mit zugehörigen Pumpen 16, 17 sowie Schichtspeicher 4 mit den Be- und Entladeeinrichtungen 5, Mehrwege-Selektionsventile 7a, 7b, 8a, 8b sowie zugehörige Rohrleitungssysteme.

Die Nutzwärme 12 wird bei Einsatz als Wärmepumpensystem über ein Mehrwege-Selektionsventil 10 und eine Pumpe 11 mit Fluid aus einer wählbaren Höhe des Speichers beschickt, das nach Wärmeabgabe an die Senke 12 über eine Schicht-Ladevorrichtung 6 wieder in den Speicher zurückströmt.

Der Kompressions-Kreislauf gemäß Figur 1 wird kontinuierlich betrieben. Der unterste Bereich des Schichtspeichers 4c zwischen den Beladeringen 5 wird nur im AdsorptionsHalbzyklus im Verdampferkreis durchströmt. Die Fluidentnahme erfolgt über das Ventil 8a aus der zweituntersten Ebene: nach Durchströmen des Verdampfers 3 erfolgt die Wiedereinschichtung in die unterste Schicht des Speichers über das Ventil 8b. Im Desorptionshalbzyklus wird der Kondensatorkreis eine Stufe höher im Speicher betrieben. Die Fluidentnahme über das Ventil 8a aus der zweituntersten Ebene, die Wiedereinschichtung nach Durchlaufen des Kondensators 3 in der dritt-untersten Ebene. In der Adsorptionsphase wird die Adsorbertemperatur durch immer tiefere Entnahme aus dem Schichtspeicher schrittweise verringert, bis die Entnahme aus der zweituntersten Ebene erfolgt. Dabei erfolgt die Entnahme immer über das Selektionsventil 7a, und die Wiederschichtung über das Selektionsventil 7b entsprechend der Rücklauftemperatur. Sobald bei Entnahme aus der zweituntersten Ebene ein definiertes Umschaltkriterium für den Adsorptionshalbzyklus erreicht ist, z.B. durch Unterschreiten einer bestimmten Temperaturspreizung im Adsorberkreislauf, erfolgt die Umschaltung auf Desorption und ein schrittweises Aufheizen des Adsorbers aus dem Schichtspeicher über die Ventile 7a (zur Entnahme) und 7b (zur Wiedereinschichtung). Über einen ganzen Ad- und Desorptions-Zyklus betrachtet bewirkt dieser, dass dem oberen Speicherbereich Wärme entzogen wird, die vom Gaskühler bei Temperaturen oberhalb der Nutzungstemperatur wieder aufgefüllt wird und auch dem untersten Speicherbereich Wärme entzogen wird die ebenfalls durch den Gaskühler aufgefüllt wird bei Temperaturen unterhalb der Nutztemperatur. Bei hinreichend großer Dimensionierung des Speichers bleibt die Kältemitteltemperatur am Austritt des Gaskühlers 9 (vor Eintritt in die Drossel 14) über die Zeit des Adsorptions-Zyklus nahezu konstant.

Bei Einsatz als Wärmepumpe, die auch Trinkwasser bereitstellt, kann an den Schichtwärmespeicher 4 zusätzlich eine Trinkwasserstation angebunden werden. Analog zur Wärmesenke kann mittels eines Mehrwegeventils aus mindestens zwei verschiedenen Höhen im Speicher Fluid entnommen werden. Dadurch kann auch eine Legionellenschutzschaltung erzielt werden.

Gemäß Figur 2 ist eine Hybrid-Wärmepumpe dargestellt. Zusätzlich zum Gaskühler 9 des CO2-Kompressionskreislaufes gibt es hier eine weitere Wärmequelle 21, die Antriebswärme für den Adsorptionskreislauf zur Verfügung stellt und mittels der Pumpe 22 den oberen Bereich der Schichtwärmespeichers 4 erwärmt. Wenn es sich bei der Wärmequelle 21 um einen Brenner handelt oder eine ähnliche Quelle, die einen Abgasstrom erzeugt, dann kann es sinnvoll sein, zur Auskühlung dieses Abgasstroms einen zusätzlichen Wärmeübertrager hinter der Wärmesenke 12 anzuordnen oder ihn in den unteren Bereich des Speichers zu integrieren. Mittels der Zusatzwärmequelle 21 kann der Adsorptions-Zyklus unabhängig vom Kompressions-Zyklus betrieben werden. Das erfindungsgemäße System kann auch als vollständig thermisch angetriebene Wärmepumpe betrieben werden. Als Niedertemperaturquelle für den Adsorptionszyklus dient in diesem Fall die zusätzliche Wärmequelle 20, die mittels des Dreiwegeventils 19 während der Adsorptionsphase in den Verdampferkreislauf geschaltet wird. Die Wärmequelle 20 kann konstruktiv mit der Wärmequelle 15 des Kompressions-Zyklus eine Einheit bilden. Sie kann aber auch eine zweite, unabhängige Wärmequelle sein. Wenn das Arbeitsmittel Wasser ist, wird die Wärmequelle 20 bevorzugt so ausgelegt, dass sie während der vorgesehenen Nutzungszeit eine Quelltemperatur von > 0°C bereitstellen kann.

Die derart aufgebaute Hybrid-Wärmepumpe ist geeignet, Strom aus fluktuierenden erneuerbaren Quellen zu nutzen und bei Nichtverfügbarkeit eines solchen Stroms zunächst den integrierten Speicher zu entladen und dann die alternative Wärmequelle (z.B. ein Gasbrenner) zu nutzen. Im Brennerbetrieb weist die Wärmepumpe einen Effizienzvorteil gegenüber einem Brennwertkessel auf. Im Kompressionsbetrieb weist sie wegen des Adsorptions-Hilfszyklus eine annähernd gleiche Effizienz auf wie subkritisch arbeitende Kompressions-Wärmepumpen mit anderen Kältemitteln. Dabei kann mit sehr geringem konstruktivem Aufwand eine zweite Wärmequelle 20 eingebunden werden, die ein anderes Temperaturniveau als die Hauptwärmequelle 15 aufweisen kann. Zudem kann der Schichtwärmespeicher 4 als Pufferspeicher genutzt werden. Mittels des Gaskühler-Wärmeüberträgers 9 ist es möglich, einen Großteil des Speichers auf nahezu 100°C aufzuladen. Auch bei der Entladung des Speichers (nach Abschalten des Kompressionsteils) kann noch der Adsorptions-Zyklus betrieben und Umweltwärme aus der Wärmequelle 20 genutzt werden. Der Speicher erreicht auf diese Art eine höhere Energiespeicherdichte als vergleichbare Wasserspeicher in einem Wärmepumpensystem mit einem Kältemittel. Wärmepumpen mit klassischen Kältemitteln, die subkritisch arbeiten, können maximal eine Speichertemperatur von nur etwa 60 - 75°C nur erreichen.

Subkritisch heißt Kondensation des Kältemittels bei einem Druck unterhalb des kritischen Drucks, d.h. es erfolgt ein Phasenübergang gasförmig/flüssig und ein Großteil der Wärme wird bei der Temperatur dieses Phasenübergangs frei (im Gegensatz zur großen Temperaturspreizung, die bei einem transkritisch betriebenen Gaskühler auftritt).

## Patentansprüche

1. Hybrid-Wärmepumpe mit wenigstens einem CO₂-Kompressionskreislauf und mit wenigstens einem Adsorptionskreislauf wobei beide Kreisläufe mit wenigstens einem Schichtspeicher (4) des wenigstens einen Adsorptionskreislaufs gekoppelt sind, wobei der wenigstens eine CO₂-Kompressionskreislauf einen Gaskühler (9) aufweist, der über den Schichtspeicher (4) mit dem wenigstens einen Adsorptionskreislauf wärmetechnisch gekoppelt ist.

2. Hybrid-Wärmepumpe nach Anspruch 1 wobei eine weitere Wärmequelle, die Antriebswärme für den Adsorptions-Zyklus zur Verfügung stellen kann und dann mittels der Pumpe den oberen Bereich der Schichtspeicher erwärmt, vorgesehen ist, wobei die Wärmequelle (21) eine Vorrichtung ist, die einen Abgasstrom erzeugt.

3. Hybrid-Wärmepumpe nach Anspruch 2 wobei die Wärmequelle ein Brenner ist.

4. Hybrid-Wärmepumpe nach einem der Ansprüche 2 oder 3 wobei die Wärmequelle (20) eine zweite, unabhängige Wärmequelle darstellt.

5. Hybrid-Wärmepumpe nach einem der Ansprüche 2 bis 4, wobei die Wärmequelle (20) mittels eines Ventils (19) in einen Verdampferkreislauf geschaltet ist.

6. Verfahren zum Betrieb einer Hybrid-Wärmepumpe nach einem der vorhergehenden Ansprüche wobei Kompressions- und Adsorptionskreislauf gleichzeitig betrieben werden, wobei Wärme aus dem Gaskühler (9) des Kompressionskreislaufs kontinuierlich an alle Schichten des Schichtspeichers (4) abgegeben und dort gepuffert wird, wobei der bei den höchsten Temperaturen vorliegende Teil dieser Wärme in der Desorptionsphase des Adsorptionskreislaufs dem Adsorber als Antriebswärme für die Desorption zugeführt wird und der bei den niedrigsten Temperaturen im Speicher vorliegende Teil dieser Wärme in der Adsorptionsphase des Adsorptionskreislaufs dem Verdampfer (3) zugeführt wird.

7. Verfahren nach Anspruch 6, wobei der Schichtspeicher (4) einen Verdampfer (3) des Adsorptionskreislaufs beheizt, wobei die niedrigsten Temperaturen im Schichtspeicher (4) unterhalb der Rücklauftemperatur einer Mitteltemperatur-Wärmesenke liegen.

8. Verfahren nach einem der vorhergehenden Verfahrensansprüche wobei als Speichermedium und Wärmeträger Wasser oder ein Wasser enthaltendes Gemisch eingesetzt wird.

9. Verfahren nach einem der vorhergehenden Verfahrensansprüche wobei der Schichtwärmespeicher (4) in seinem unteren Bereich (4c) in fluiddicht abgeschlossenen Elementen ein zweites Fluid enthält, das eine höhere Schmelztemperatur aufweist als das übrige Speichermedium, das auch als Wärmeträgerfluid im Adsorber- und Verdampferkreislauf vorliegt.

10. Verfahren nach Anspruch 9, wobei mindestens eine der Niedertemperaturwärmequellen (15, 20) bei einer Temperatur unterhalb des Gefrierpunktes des zweiten Fluids betrieben wird und ein zeitweiliges Erstarren des zweiten Fluids auftritt, dieses also als Phasenwechselmaterial genutzt wird.

11. Verfahren nach einem der vorhergehenden Verfahrensansprüche, wobei Nutzkälte bei verschiedenen Temperaturniveaus bereitgestellt wird mit einem niedrigeren Temperaturniveau im Verdampfer (15) des Kompressionskreislaufs und einem höheren Temperaturniveaus der Wärmequelle (20) des Adsorptionskreislaufs.

12. Verfahren nach einem der Ansprüche 6 bis 11, wobei die Temperatur des Verdampfers (3) im Adsorptionskreislauf im Verlauf des Adsorptionshalbzyklus erhöht wird, indem dem Verdampfer wärmeres Fluid aus dem Schichtwärmespeicher (4) zugeführt wird.

13. Verwendung der Hybrid-Wärmepumpe nach einem der Ansprüche 1 bis 5 zur Bereitstellung von Trinkwarmwasser.

## Claims

1. Hybrid heat pump with at least one CO₂-compression circuit and with at least one adsorption circuit wherein both circuits are coupled to at least one layer store (4) of the at least one adsorption circuit, **wherein** the at least one CO₂-compression circuit has a gas-cooler (9), which by means of the layer store (4) is thermotechnically coupled with the at least one adsorption circuit.

2. Hybrid heat pump according to claim 1, **wherein** a further heat source is provided which can provide the driving heat for the adsorption cycle and then by means of the pump warms up the upper area of the layer store, whereby the heat source (21) is a device that generates a off-gas stream.

3. Hybrid heat pump according to claim 2, **wherein** the heat source is a burner.

4. Hybrid heat pump according to one of claims 2 or 3, **wherein** the heat source (20) is a second, independent heat source.

5. Hybrid heat pump according to one of claims 2 to 4, **wherein** the heat source (20) is switched to an evaporator circuit by means of a valve (19).

6. Method for operating a hybrid heat pump according to any of the preceding claims, **wherein** compression and adsorption circuit are operated simultaneously, whereby heat from the gas cooler (9) of the compression circuit is continuously emitted to all layers of the layer store (4) and then being buffered there, whereby the part of this heat, present at the highest temperatures, is added in the desorption phase of the adsorption circuit to the adsorber as drive heat for the desorption, and the part of that heat, present at the lowest temperatures in the store, is added to the evaporator (3) in the adsorption phase of the adsorption circuit.

7. Method according to claim 6, **wherein** the layer store (4) heats an evaporator (3) of the adsorption circuit, whereby the lowest temperatures in the layer store (4) are below the return temperature of a medium temperature heat sink.

8. Method according to any of the preceding method claims, **wherein** water or a water containing mixture is used as storage medium and heat carrier.

9. Method according to any of the preceding method claims, **wherein the** the layer heat store (4) in its lower region (4c) in fluid impermeable elements comprises a second fluid, which has a higher melting temperature than the rest of the storage medium, which also is present as heat carrier fluid in the adsorber and evaporator circuit.

10. Method according to claim 9, **wherein** at least one of the low temperature heat sources (15, 20) is operated at a temperature below the freezing point of the second fluid and a temporary solidification of the second fluid occurs, which therefore is used as phase change material.

11. Method according to any of the preceding method claims, **wherein** useful cold is provided at different temperature levels with a lower temperature level in the evaporator (15) of the compression circuit and a higher temperature level of the heat source (20) of the adsorption circuit.

12. Method according to one of claims 6 to 11, **wherein** the temperature of the evaporator (3) in the adsorption circuit is increased in the course of the adsorption half-cycle, by adding warmer fluid to the evaporator from the layer heat store (4).

13. Use of the hybrid heat pump according to one of claims 1 to 5 for providing hot drinking water.

## Revendications

1. Pompe à chaleur hybride avec au moins un CO₂-circuit de compression et avec au moins un circuit d'adsorption, les deux circuits étant couplés à au moins un accumulateur de couche (4) d'au moins un circuit d'adsorption, **dans laquelle** l'au moins un circuit de CO₂-compression a un refroidisseur de gaz (9), que par I 'acculumateur de couche (4) est couplé thermiquement avec l'au moins un circuit d adsorption.

2. Pompe à chaleur hybride selon la revendication 1, **dans laquelle** une autre source de chaleur est prévue, que peut fournir de la chaleur propulsive pour le cycle d' adsorption et puis par moyen de la pompe chauffe la zone supérieure du I 'accumulateur de couche, la source de chaleur (21) étant un dispositif que génère un flux de gaz d'échappement.

3. Pompe à chaleur hybride selon la revendication 2, **dans laquelle** la source de chaleur est un brûleur.

4. Pompe à chaleur hybride selon l'une des revendications 2 ou 3, **dans laquelle** la source de chaleur (20) est une deuxième source de chaleur indépendante.

5. Pompe à chaleur hybride selon l'une des revendications 2 à 4, **dans laquelle** la source de chaleur (20) est reliée à un circuit d'évaporateur par moyen d'une vanne (19).

6. Procédé de fonctionnement d'une pompe á chaleur hybride selon l'une des revendications précédentes, **dans lequel** le circuit de compression et le circuit d 'adsorption sont opérés en même temps, la chaleur du refroidisseur de gaz (9) du circuit de compression étant dégagée en continue à toutes les couches d'acculumateur de couche (4) et y étant tamponnée, la partie de cette chaleur, présente aux températures les plus élévées, dans la phase de désorption du circuit d'adsorption étant fournie à l'adsorbeur comme chaleur propulsive pour la désorption et la partie de cette chaleur, présente à l'acculumateur aux températures les plus bas étant fournie à l'évaporateur (3) en la phase d'adsorption du circuit d'adsorption.

7. Procédé selon la revendication 6, **dans laquelle** l'acculumateur de couche (4) chauffe un évaporateur (3) du circuit d'adsorption, les températures les plus basses dans l'acculumateur de couche (4) étant dessous de la température de retour d'un dissipateur thermique à température moyenne.

8. Procédé selon l'une des revendications de procédé, **dans laquelle** comme medium d'acculumateur et caloporteur d'eau ou une mixture contenant d'eau est utilisé.

9. Procédé selon l'une des revendications de procédé, **dans laquelle** l'acculumateur de couche (4) contient dans sa zone inférieure (4c) dans des éléments imperméables au fluide un deuxième fluide, que a une plus haute température de fusion plus haute que le reste du medium d'accumulation, qu'est aussi présent comme fluide caloporteur au circuit d'adsorption et an circuit d'évaporation.

10. Procéde selon la revendication 9, **dans laquelle** au moins l'une des sources de chaleur aux températures bas (15, 20) est opérée à une température inférieure du point refroidisseur du deuxième fluide et une solidification temporaire du deuxième fluide se produit, ce dernière donc est utilisée comme matériau à changement de phase.

11. Procédé selon l'une des revendications de procédé, **dans laquelle** froid utile est fourni à des différents niveaux de température avec un niveau de température plus bas dans l'évaporateur (15) du circuit de compression et avec un niveau plus haut de la source de la chaleur (20) du circuit d'adsorption.

12. Procédé selon l'une des revendications 6 à 11, **dans laquelle** la température de l 'évaporateur (3) dans le circuit d'adsorption est augmenté en course d'adsorption demi-cycle, en apportant à l'évaporateur un fluide plus chaud de la chaleur de couche (4).

13. Utilisation de la pompe à chaleur hybride selon l'une des revendications 1 à 5 pour fournir d'eau chaude potable.
